# EUROPÄISCHE PATENTSCHRIFT

(11) **EP 1 591 304 B1**
(45) Veröffentlichungstag und Bekanntmachung des Hinweises auf die Patenterteilung: **31.03.2010**
(21) Anmeldenummer: 05007696.7
(22) Anmeldetag: 08.04.2005
(51) Int. Cl.: B60N 2/28

(54) **Babyschale**
Baby support
Support pour bébé

(30) Priorität: 28.04.2004 DE 102004020902
(43) Veröffentlichungstag der Anmeldung: 02.11.2005
(73) Patentinhaber: Recaro GmbH & Co. KG, 73230 Kirchheim/Teck (DE)
(72) Erfinder: Kespohl, Horst, 73101 Aichelberg (DE)
(74) Vertreter: Küchler, Stefan

(56) Entgegenhaltungen:
- DE-A1- 19 527 351
- FR-A- 2 841 755
- US-A- 6 030 047
- US-A1- 2003 164 631

## Beschreibung

Die Erfindung richtet sich auf eine Babyschale mit einer Sitzfläche und einer dieser gegenüber sehr flach geneigten Rückenlehne für den Transport von Kleinkindern etwa in halb liegender, halb sitzender Körperhaltung, insbesondere in einem Auto entgegen dessen Fahrtrichtung, wobei ein den Kopf des Babys stützender Bereich gegenüber der Sitzfläche etwa in Richtung des Rückgrats eines in der Babyschale sitzenden Babys verschieb- bzw. ausziehbar ist, wobei die Länge der Rückenlehne etwa in Richtung des Rückgrats eines in der Babyschale sitzenden Babys veränderbar ist, insbesondere auch dann, wenn ein Kind in der Babyschale liegt und/oder wenn die Babyschale auf einem Sitz eines Autos entgegen dessen Fahrtrichtung befestigt ist.

Bis zu einem Körpergewicht von 9 kg müssen Kinder in einem Auto entgegen dessen Fahrtrichtung sitzen. Dafür gibt es sog. Babyschalen, die auf einem Fahrzeugsitz entgegen der Fahrtrichtung, d.h., mit der Rückenlehne nach vorne, befestigt werden. Diese sind für ein maximales Körpergewicht zwischen 9 und 13 kg ausgelegt, das bei Kleinkindern etwa zwischen dem 9. und 15. Lebensmonat erreicht wird.

Dabei ist zu bedenken, dass Kleinkinder bei der Geburt zumeist nur etwa 1/4 bis 1/3 dieses Körpergewichts besitzen und dann in einer herkömmlichen Babyschale kaum ausreichenden Halt finden, so dass sie bspw. bei einem Aufprall nur schlecht geschützt sind.

Außerdem ist zur Verankerung der Babyschale auf einem Fahrzeugsitz ein fahrzeugeigener Dreipunktgurt zu verwenden, der vorne an der Rückenlehne der Babyschale vorbeigeführt und dann mit dem dafür vorgesehenen Gurtschloß verbunden wird. Die bei üblichen Fahrzeugen zur Verfügung gestellte, maximale Gurtlänge begrenzt dabei die Baugröße einer Babyschale. Dies führt wiederum dazu, dass ein Kind relativ bald über eine herkömmliche Babyschale hinauswächst, so dass von dieser der Kopf des Kindes nicht mehr ausreichend abgestützt wird.

Die inhaltlich großenteils übereinstimmenden US-Patentdokumente US 2003/0164631 A1, welches eine Babyschale entsprechend dem Oberbegriff des Anspruchs 1 zeigt, und US 2003/0164632 A1 beschreiben jeweils u.a. eine Babyschale. Zwar kann dort ein den Kopf stützender Bereich der Rückenlehne etwa in Richtung des Rückgrats des Kindes verstellt werden; dieser Teil befindet sich jedoch stets unterhalb der Oberkante der Rückenlehne, so dass dadurch die Länge der Rückenlehne nicht variiert werden kann.

Dasselbe gilt für die FR 2 841 755 A: Auch dort ragt die Oberkante des beweglichen Teils der Rückenlehne in deren Verschieberichtung niemals über die Oberkante des unbeweglichen Teils der Rückenlehne hinaus, so dass deren Schiebeposition die Länge der Rückenlehne niemals beeinflußt.

Auch die EP 1 006 017 A2 offenbart eine Babyschale mit einem verstellbaren Bereich der Rückenlehne. Dieser erreicht jedoch in seiner maximal ausgezogenen Position in seiner Verschieberichtung gerade eben die Oberkante des unbeweglichen Teils der Rückenlehne bzw. steht in Verschieberichtung in dieser Position allenfalls um einige Millimeter über; in allen anderen Positionen bleibt er jedoch in Verschieberichtung vollständig unterhalb der Oberkante des festen Rückenlehnenteils und beeinflußt daher die Länge der Rückenlehne nicht. Außerdem ist hier der bewegliche Rückenlehnenteil nicht entlang einer ebenen Fläche verstellbar, sondern entlang einer gekrümmten Kurve, so dass er sich beim Einschieben im Beckenbereich des Kindes nach vorne verlagert. Daher kann er nicht bei einem in der Babyschale sitzenden Kind betätigt werden, sondern würde dabei das Kind im Bereich von dessen Lendenwirbelsäule quetschen oder gar verletzen.

DE 195 27 351 A1 beschreibt einen Kindersitz, der durch Umbau für verschiedene Alters- bzw. Gewichtsstufen eines Kindes adaptiert werden kann. Jedoch erfolgt dieser Umbau nicht durch Verschieben eines Teils der Rückenlehne, sondern durch Austausch unterschiedlicher Sitzteile. Der einzige, entgegen der Fahrtrichtung einbaubarer Sitzteil hat nicht die Form einer Babyschale mit einer auch die Beine des Babys untergreifenden Sitzfläche. Außerdem ist in dieser Position eine Längenverstellung der Rückenlehne überhaupt nicht möglich.

Die US 6 030 047 A betrifft ebenfalls keine Babyschale mit einem die Beine untergreifenden Bereich der Sitzfläche, sondern einen Kindersitz für ältere Kinder, welche bereits aufrecht sitzen können, da die Rückenlehne gegenüber der Sitzfläche nicht flach geneigt ist. Ferner ist hier zwar eine verschiebbare Kopfstütze vorgesehen, die aber nur in ihrer äußersten Position über die Oberkante des unbeweglichen Teils der Rückenlehne übersteht. Bei einer derartigen Anordnung stellt sich das der Erfindung zugrunde liegende Problem überhaupt nicht, weil ein derartiger Kindersitz mit aufrechter Sitzposition an einem fahrzeugeigenen Gurt anders verankert wird als eine in horizontaler Richtung weit ausladende, entgegen der Fahrtrichtung orientierte Babyschale. Ein Überstreifen des Gurtes über die Rückenlehne wie bei einer Babyschale findet hierbei niemals statt.

Ähnliches gilt für die FR 2 787 977 A1, welche ebenfalls keine Babyschale offenbart, sondern einen Kindersitz mit aufrechter Sitzposition, wie sie nur von älteren Kindern eingenommen werden kann. Hier ist zwar eine ausziehbare Kopfstütze vorhanden; dieselbe wird jedoch niemals von dem festen Teil der Rückenlehne umgriffen, sondern weist in den ausgezogenen Positionen sogar noch einen Spalt zu dem festen Teil der Rückenlehne auf.

Aus den beschriebenen Nachteilen des Standes der Technik resultiert das die Erfindung initiierende Problem, eine gattungsgemäße Babyschale derart auszubilden, dass es einem Baby über den gesamten Zeitraum von der Geburt bis zu dem Zeitpunkt, wo sein Körpergewicht maximal 13 kg erreicht hat, ausreichenden Halt und Sicherheit gibt, wobei der Einbau in ein Fahrzeug, insbesondere das Verankern an einem fahrzeugeigenen Gurt, trotz der großen horizontalen Länge einer Babyschale so weit als möglich erleichtert sein soll.

Die Lösung dieses Problems gelingt bei einer gattungsgemäßen Babyschale dadurch, dass die verschiebbare Kopfstütze an ihrer Außenseite zumindest teilweise von einem unveränderlichen, insbesondere einem mit dem Korpus der Babyschale integrierten Bereich der Rückenlehne vorzugsweise stützend umgriffen wird, wobei die Oberkante der verschiebbaren Kopfstütze in jeder ausgezogenen Position über die Oberkante des unveränderlichen Bereichs der Rückenlehne übersteht.

Durch diese Maßnahme kann die Rückenlehne den jeweiligen Erfordernissen angepaßt werden: Bei Neugeborenen wird die Länge der Rückenlehne minimiert, wobei vorzugsweise ein ggf. von Seitenstützen flankierter Bereich nach unten geschoben wird und dabei nach Art eines Sitzverkleinerers wirkt, d.h., dem Baby einen verbesserten Seitenhalt gibt. Später wird die Rückenlehne dem Wachstum des Kindes angepaßt und dazu vorzugsweise der ggf. mit Seitenstützen versehene Bereich herausgeschoben. Dabei wirkt der ausziehbare Bereich mehr und mehr als reine Kopfstütze, während darunter ein vorzugsweise auch seitlich vergrößerter Bereich als Rückenlehne verbleibt und läßt dem wachsenden Kind zunehmenden Raum. So "wächst" die Babyschale mit und schützt das Kind immer optimal. Andererseits ist es auch möglich, die Rückenlehne vorübergehend zu verkürzen, bspw. dann, wenn die Babyschale in einem Auto eingebaut werden soll und zu diesem Zweck ein Dreipunktgurt übergestreift werden muß. Dies ist nicht unwichtig, da manche Dreipunktgurte selbst in ihrer maximal ausgezogenen Position vergleichsweise kurz sind und daher kaum über eine herkömmliche Babyschale gestreift werden können, geschweige denn über die verlängerte Rückenlehne einer erfindungsgemäßen Babyschale. Da beim Einbau in ein Auto zumeist die komplette Babyschale mit einem darin sitzenden bzw. liegenden Kind auf den betreffenden Autositz gestellt wird, sollte eine Verstellung der Rückenlehne selbst dann möglich sein, wenn gerade ein Kind in der Babyschale liegt. Indem die verschiebbare Kopfstütze an ihrer Außenseite zumindest teilweise von einem unveränderlichen, insbesondere einem mit dem Korpus der Babyschale integrierten Bereich der Rückenlehne vorzugsweise stützend umgriffen wird, verbleibt einerseits auch bei herausgeschobener Kopfstütze im Bereich der Lendenwirbelsäule eine querschnittlich schalenförmige Kontur, die dem Baby in jedem Stadium seiner Entwicklung eine optimale Sicherheit auch gegenüber Seitenaufprallunfällen od. dgl. gibt. Andererseits wird die verschiebbare Kopfstütze dadurch zusätzlich stabilisiert und kann sich daher bei einer plötzlichen Verzögerung des Fahrzeugs nicht nennenswert verbiegen, sondern hält das Kind sicher in dessen üblicher Liegeposition. Die Oberkante der verschiebbaren Kopfstütze steht erfindungsgemäß in jeder ausgezogenen Position über die Oberkante des unveränderlichen Bereichs der Rückenlehne über. Der unveränderliche Lehnenbereich sollte andererseits in vollständig eingeschobenem Zustand der Kopfstütze nicht oder nicht viel gegenüber dem unveränderlichen Lehnenbereich nach außen überstehen, damit sich durch Einschieben der Kopfstütze die Länge der Babyschale minimieren läßt und ggf. auch kürzere Dreipunktgurte übergestreift werden können. Im Idealfall wird die verschiebbare Kopfstütze in ihrer ganz eingeschobenen Position vollständig von dem unveränderlichen Lehnenteil umgriffen.

Vorteilhaft ist ferner eine möglichst spielfreie Führung der Verstellmechanik, eine hohe Stabilität auch bei plötzlichen, starken Beschleunigungen oder Verzögerungen, sowie eine Feststellmöglichkeit in beliebigen oder gerasterten Zwischenpositionen, so dass eine eingestellte Konfiguration sich nicht selbsttätig verändern kann.

Die Verstellbarkeit der Rückenlehne wird dadurch realisiert, dass ein den Kopf des (älteren) Kleinkinds stützender Bereich gegenüber der Sitzfläche etwa in Richtung des Rückgrats eines in der Babyschale sitzenden Babys verschieb- bzw. ausziehbar ist. Wie oben bereits ausgeführt, kann dieser auch als Kopfstütze zu bezeichnende Teil der Rückenlehne bei dem Neugeborenen die Funktion eines Sitzverkleinerers übernehmen und dem Baby auch in diesem frühen Lebensabschnitt den erforderlichen Seitenhalt geben. Zu diesem Zweck kann die verschiebbare Kopfstütze in der eingeschobenen Position bis nahezu an die Sitzfläche herabreichen.

Es hat sich als günstig erwiesen, dass eine mittlere, die Rückenlehne approximierende Ebene mit einer mittleren, die Sitzfläche approximierenden Ebene einen stumpfen Winkel einschließt, etwa zwischen 100° und 160°, vorzugsweise zwischen 110° und 150°, insbesondere zwischen 120° und 140°. Ein derartiger, großer Öffnungswinkel erlaubt dem Baby eine entspannte, fast liegende Position, wobei die Wirbelsäule weitgehend entlastet ist, da die Rückenlehne mehr als Unterlage denn als Lehne wirkt. Andererseits sorgt die dennoch leicht ansteigende Rückenlehne für einen guten Rückhalt im Fall einer plötzlichen Verzögerung des Fahrzeugs.

Es liegt im Rahmen der Erfindung, dass die etwa parallel zu der Aufstandsfläche gemessene Länge der Babyschale größer ist als ihre etwa lotrecht zu der Aufstandsfläche gemessene Höhe, vorzugsweise mehr als 1,3-mal so groß, insbesondere mehr als 1,6 mal so groß, vorzugsweise unabhängig von der eingestellten Länge der Rückenlehne. Diese Größenrelation läßt erkennen, dass es sich bei der Körperhaltung des Babys mehr um Liegen denn um Sitzen handelt.

Vorzugsweise entspricht die maximale Länge der Rückenlehne in deren ausgezogenem Zustand dem 1,3- bis 1,7-fachen, vorzugsweise etwa dem anderthalbfachen der minimalen Länge der Rückenlehne in deren eingeschobenem Zustand. Eine solche Variabilität ist erforderlich, um dem Baby sowohl bei einer Körpergröße von etwa 50 cm bis zu etwa 85 cm gerecht zu werden.

Um auch den Kopf des älteren Kleinkinds noch ausreichend abzustützen, sollte die verschiebbare Kopfstütze in der ausgezogenen Position etwa um die Hälfte ihrer zu dem Rückgrat des Kleinkindes parallelen (Minimal-) Erstreckung ausziehbar sein. Die eingeschobene Rückenlehne ist dann einerseits an die Größe eines Neugeborenen angepaßt und andererseits auch kurz genug, um einen Dreipunktgurt jedes beliebigen Personenkraftwagens überstreifen zu können.

Aus konstruktiven Gesichtspunkten hat es sich bewährt, dass die Längserstreckung der verschiebbaren Kopfstütze samt einer in deren unteren Bereich angeformten, lappenartigen Verlängerung etwa der Längserstreckung der Rückenlehne entspricht. Dadurch ist es möglich, den Übergangsbereich von dem verschiebbaren Lehnenteil zu dem Babyschalenkorpus etwa in den Bereich des Beckens des Babys zu verlegen, wo er aufgrund der dort stark gekrümmten Schaleninnenseite ohne von dem Kind wahrnehmbare Druckstellen realisierbar ist.

Wenn andererseits die Gesamtlänge der Babyschale in maximal ausgezogenem Zustand der Rückenlehne, insbesondere der verschiebbaren Kopfstütze, gleich oder größer ist als das anderthalbfache der Länge einer unterseitigen Aufstandsfläche der Babyschale zum Aufsetzen auf einem Autositz, so finden auch ältere Babys bequem in einer solchen Schale Platz.

Die Erfindung empfiehlt ferner, dass die Rückenlehne, insbesondere die verschiebbare Kopfstütze, gegenüber einer unterseitigen Aufstandsfläche der Babyschale zum Aufsetzen auf einem Autositz wenigstens um ein Maß übersteht, das größer ist als ein Drittel der Länge der Aufstandsfläche, vorzugsweise größer als die Hälfte dieser Aufstandsflächenlänge. Somit steht nur oder überwiegend die Rückenlehne gegenüber der Aufstandsfläche über, die Sitzfläche dagegen weniger oder gar nicht. Dadurch läßt sich die Babyschale optimal an die Rückenlehne eines Autositzes heranschieben und sitzt gleichzeitig vollflächig auf dem Autositz auf. Dennoch kann die Aufstandsfläche der Babyschale auch in Längsrichtung konvex gewölbt sein oder in Längsrichtung der Schale verlaufende Kufen aufweisen nach Art von Schaukelkufen, um die Babyschale auf einem ebenen Untergrund auch als Wiege einsetzen zu können. Wichtig ist, dass sich der in Längsrichtung der Babyschale am stärksten gekrümmte Bereich ihrer Innenseite, wo in jedem Alter der Beckenbereich des Kindes und damit der Schwerpunkt der Babyschale liegt, möglichst direkt oberhalb von deren Aufstandsfläche befindet. Dann ist gewährleistet, dass die Schale unabhängig von dem Kindesalter auf einem ebenen Untergrund stets stabil stehen bleibt und nicht kippen kann, sondern höchstens schaukeln.

Um dem Baby eine überwiegend liegende Position zu ermöglichen, sollte die Höhe der horizontalen Oberkante des unveränderlichen Teils der Rückenlehne gegenüber der Aufstandsflächenebene zwischen dem 2-fachen und dem 5-fachen der minimalen Höhe der Sitzfläche gegenüber der Aufstandsflächenebene etwa im Bereich des Übergangs von der Rückenlehne zur Sitzfläche entsprechen.

Es hat sich bewährt, im Bereich der Unterkante der Kopfstütze einen platten- oder lappenförmigen Ansatz vorzusehen. Dieser kann in eingeschobenem Zustand der Rückenlehne entweder über der Innenseite des unveränderlichen Bereichs der Rückenlehne und/oder über der Sitzfläche liegen oder der in einen Schlitz im Übergangsbereich zwischen Sitzfläche und Rückenlehne eintauchen und aus diesem alsdann herausziehbar sein. Dieser lappenförmige Ansatz sorgt für einen ebenen oder nur sanft gekrümmten Verlauf der Innenseite der Rückenlehne bis herab zu dem für das Becken des Babys vorgesehenen Bereichs. Dadurch werden für die Entwicklung der Wirbelsäule ungünstige Druckstellen im Bereich des Rückens vermieden. Dieser Ansatz könnte zwar auch aus einem steifen Werkstoff bestehen, ein nachgiebiges Material ermöglicht es ihm jedoch, je nach Einschubstellung einem unterschiedlich gekrümmten Verlauf der Rückenlehne oder Sitzfläche folgen zu können.

Die Erfindung läßt sich dahingehend weiterbilden, dass der platten- oder lappenförmiger Ansatz am unteren Ende der verschiebbaren Rückenlehne/Kopfstütze zumindest teilweise unter die Sitzfläche oder den Übergangsbereich zwischen Rückenlehne und Sitzfläche schiebbar ist. Dort findet der eingeschobene Teil der Kopfstütze genügend Platz, so dass die Bauhöhe der Babyschale kaum größer sein muß als bisher. Dies wird noch dadurch unterstützt, dass ein lappenartiger Fortsatz aus einem flexiblen Material schnell in eine etwa horizontale Lage umgelenkt werden kann.

Vorzugsweise ist die Kopfstütze entlang einer Führung in dem unveränderlichen Bereich der Rückenlehne verschiebbar. Diese Führung hat vorzugsweise einen gerade gestreckten Verlauf; sie könnte aber auch sanft gekrümmt sein.

Entsprechend einer weiteren Konstruktionsvorschrift ist die (gerade getreckte) Führung für die verschiebbare Kopfstütze unter einem Winkel zwischen 100° und 160°, vorzugsweise zwischen 110° und 150°, insbesondere zwischen 120° und 140°, gegenüber einer mittleren, die Sitzfläche approximierenden Ebene geneigt, so dass die Innenseite der Kopfstütze unabhängig von ihrer Verschiebeposition etwa koplanar zu ihrer Lage in eingeschobenem Zustand bleibt.

Es wird empfohlen, dass die Führung zwischen verschiebbarer Kopfstütze einerseits und dem stützenden Teil der Rückenlehne andererseits Hinterschneidungen aufweist, bspw. nach Art eines Schwalbenschwanzes. Dadurch wird die Lage der Kopfstütze gerade auch bei starken Beschleunigungs- oder Verzögerungskräften zuverlässig sichergestellt. Derartige Hinterschneidungen können andererseits auch durch Schraubenköpfe gebildet sein, welche Längsschlitze des jeweils anderen Teils der Rückenlehne durch- und die betreffenden Schlitzränder umgreifen.

Ergänzend dazu kann vorgesehen sein, dass die verschiebbare Kopfstütze an der Rückenlehne arretierbar ist. So wird auch der einzige, angesichts der Führungseinrichtung noch bestehende Bewegungs-Freiheitsgrad während des Gebrauchs aufgehoben. Dadurch sind Verletzungen völlig ausgeschlossen. Eine Arretierung der verschiebbaren Kopfstütze an der Rückenlehne erfolgt durch einen Formschluß, bspw. mittels eines Arretierungsstiftes od. dgl., der je nach gewünschter Position durch unterschiedliche, an der verschiebbaren Kopfstütze und/oder an der Rückenlehne angeordnete Öffnungen oder Vertiefungen hindurchsteckbar ist. Vorzugsweise werden die Arretierungsstifte von der Rück- oder Außenseite der Babyschale her eingesteckt, so dass sie auch bei in der Babyschale liegendem Kind zugänglich sind. Es kann sich allerdings auch um einen Klemmkörper handeln, der bspw. an der Kopfstütze bspw. mit einer (Flügel-) Schraube verankert ist und die Führungsschiene durch- oder umgreift und bei der Fixierung reibschlüssig an dieselbe herangezogen wird.

Um das Baby auch bei Seitenauffahrunfällen zu schützen, kann die verschiebbare Kopfstütze mit Seitenstützen versehen sein. Eine vorteilhafte Konstruktionsregel sieht vor, dass die Längserstreckung der Kopf-Seitenstützen in Längsrichtung der Rückenlehne etwa der minimalen Länge der Rückenlehne entspricht. Demzufolge wirkt die eingefahrene Kopfstütze wie ein kompletter Sitzverkleinerer. Für diese Funktion ist ferner bedeutsam, dass sich die Seitenstützen zwischen, d.h., innerhalb von seitlichen Armlehnen des stützenden Bereichs der Rückenlehne befinden.

Ebenfalls zum Schutz des Babys befindet sich zu beiden Seiten der Sitzfläche je eine nach oben gezogene Seitenwange, die gleichzeitig als Armstütze wirken kann.

Darüber hinaus eigenen sich derartige Seitenwangen / Armstützen der Sitzfläche zur Fixierung der Babyschale an einem Fahrzeugsitz, wenn in ihrer Oberkante je eine Vertiefung zum Einlegen eines fahrzeugeigenen Sicherheitsgurtes vorgesehen ist.

Da der fahrzeugeigene Gurt den Bedürfnissen eines Kleinkindes nicht angepaßt ist, sieht die Erfindung an der Babyschale einen schaleneigenen Gurt vor, insbesondere einen Schulter- oder Hosenträgergurt. Dabei befindet sich ein Gurtschloß an dem freien Ende eines vergleichsweise kurzen, etwa zwischen den Beinen des Babys im Bereich der Schaleninnenseite bzw. der Sitzfläche verankerten oder geführten Gurtbandes. In dieses Gurtschloß sind die an den freien Enden zweier hosenträgerartiger Schultergurte befestigten Zungen einsteckbar.

Die oberen (sichtbaren) Enden der Schultergurte sollten in schlitzförmigen Ausnehmungen der verschiebbaren Kopfstütze geführt oder verankert sein, weil dadurch diese Führungs- oder Verankerungspunkte beim Anpassen der Babyschale an die zunehmende Körpergröße des Babys automatisch immer richtig eingestellt werden.

Die Erfindung läßt sich dahingehend weiterbilden, dass der Schultergurt durch längliche Vertiefungen in dem unveränderlichen Teil der Rückenlehne geführt ist. Dadurch wird ein Umfädeln der Schultergurte bei einer Verstellung der Kopfstütze vermieden. Diese länglichen Vertiefungen - wie auch die damit sich bei jeder Einstellung deckenden Schlitze in der Kopfstütze - liegen vorzugsweise zu beiden Seiten einer die Verstellung erlaubenden Führungsschiene. Die länglichen Vertiefungen in dem unveränderlichen Teil der Rückenlehne verlaufen vorzugsweise parallel zu der Führungsschiene; ihre Breite entspricht etwa der Gurtbreite, und ihre Länge etwa dem maximalen Verschiebungsgrad der Kopfstütze gegenüber dem feststehenden Teil der Rückenlehne.

Die Erfindung zeichnet sich ferner aus durch einen an dem Korpus der Schale ggf. verstellbar verankerten Tragbügel. So kann die Babyschale nach Ausbau aus einem Fahrzeug mitgenommen und zum Tragen des Babys verwendet werden. Vorzugsweise handelt es sich hierbei um einen Bügel mit einem U-förmigen Verlauf, dessen beide Enden an je einer Seite der Babyschale verankert sind.

Schließlich entspricht es der Lehre der Erfindung, dass im Bereich des Übergangs zwischen Rückenlehne / Kopfstütze einerseits und Sitzfläche andererseits ein verschwenkbarer Tragbügel befestigt oder angelenkt ist. Durch Verschwenken des Tragbügels wird der Zugang zu dem Schaleninneren freigegeben, um ein Baby hineinlegen oder herausnehmen zu können. Der Bügel kann ggf. in einer oder mehreren Positionen arretiert werden, damit die Babyschale nicht kippen kann und das Baby unabhängig von seiner Körpergröße immer nahezu horizontal liegend getragen werden kann. Dazu ist es ferner von Vorteil, wenn ein solcher Tragbügel etwa im Bereich des Schwerpunktes an der Babyschale besfestigt oder angelenkt ist. Dieser Schwerpunkt liegt stets etwa im Bereich des Übergangs von der Sitzfläche in die Rückenlehne.

Weitere Merkmale, Eigenschaften, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: eine perspektivische Darstellung einer erfindungsgemäßen Babyschale in der Konfiguration für neugeborene Babys;
- Fig. 2: eine perspektivische Darstellung der Babyschale aus Fig. 1 in der Konfiguration für Kleinkinder etwa im Alter von einem Jahr;
- Fig. 3: die in der Babyschale aus Fig. 1 integrierte Mechanik, ebenfalls in einer perspektivischen Darstellung;
- Fig. 4: eine Vorderansicht der Anordnung aus Fig. 3; sowie
- Fig. 5: eine rückwärtige Ansicht der Anordnung aus Fig. 3.

Eine erfindungsgemäße Babyschale 1 umfaßt ein Unterteil 2 mit einer unterseitigen Aufstandsfläche 3 und einer als gepolsterte Sitzfläche 4 ausgebildeten Oberseite, die seitlich von zwei Armstützen 5 und an ihrer Rückseite von einer relativ flachen Rückenlehne 6 begrenzt wird.

Die Aufstandsfläche 3 kann in Längsrichtung der Babyschale 1 leicht konvex gewölbt sein, so dass diese einerseits auf einer ebenen Unterfläche als Wiege verwendet werden kann und andererseits auf einem Autositz sicher aufgesetzt werden kann. Um die Babyschale 1 dort zu verankern, wird der fahrzeugeigene Gurt verwendet und kann dabei in zwei schlitzartige Vertiefungen 7 in der Oberseite 8 der Armstützen 5 eingelegt werden.

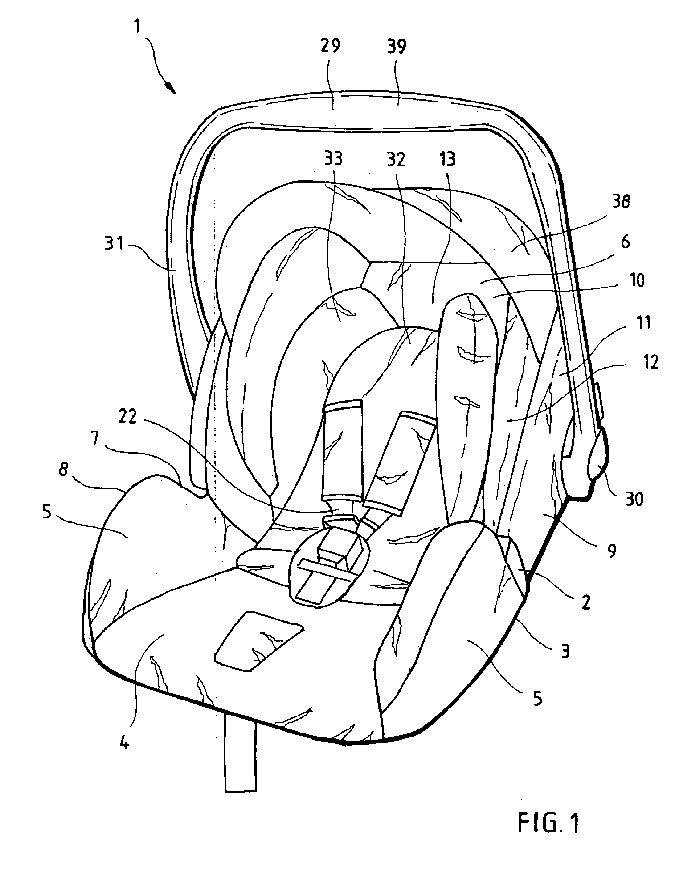

Die Rückenlehne 6 besteht aus einem unveränderlichen Teil 9 und einem ausziehbaren Teil 10. Beide Teile haben je zwei nach vorne ragende Seitenlehnen 11, 12. Der ausziehbare Teil 10 der Rückenlehne 6 ist schmäler als der unveränderliche Teil 9 und findet nach Art eines Sitzverkleinerers zwischen den Seitenlehnen 11 des unveränderlichen Teils 9 Platz. Zusätzlich kann noch ein weiterer, nur aufgelegter und jederzeit entfernbarer Sitzverkleinerer 32, bspw. mit Seitenpolstern 33, vorhanden sein. In dieser, in Fig. 1 wiedergegebenen Konfiguration eignet sich die Babyschale 1 besonders für Neugeborene mit einer Körpergröße von etwa 50 cm.

Bei der Konfiguration nach Fig. 1 liegen die Seitenlehnen 11, 12 beider Lehnenteile 9, 10 flächig und etwa deckungsgleich aneinander an. Die Innenseite bzw. Auflagefläche 13 der Rückenlehne 6 geht in dem Bereich des Beckens eines Babys mit einem allmählichen Schwung und ohne spürbaren Knick in die Sitzfläche 4 über. Dieser geschwungene Bereich nähert sich approximativ einer Sitzebene einerseits und einer Lehnenebene andererseits oder geht in diese Ebenen über. Diese (ggf. hypothetischen) Ebenen schließen einen sehr stumpfen Winkel von etwa 120° bis 140° ein.

In der Position nach Fig. 1 befindet sich der Schwerpunkt in der rückwärtigen Hälfte der Sitzfläche 4. Auf einer ebenen Unterlage liegt in diesem Bereich dann der Aufstandspunkt der Aufstandsfläche 3. Dabei steigt die Sitzfläche 4 bzw. -ebene zu ihrer freien Kante hin unter einem Winkel von etwa 10° bis 30° an; die Rückenlehne 6 oder -ebene steigt zu ihrer freien Kante hin unter einem Winkel von 25° bis 55° an, und der Oberkörper des Babys ist daher nur wenig aufgerichtet.

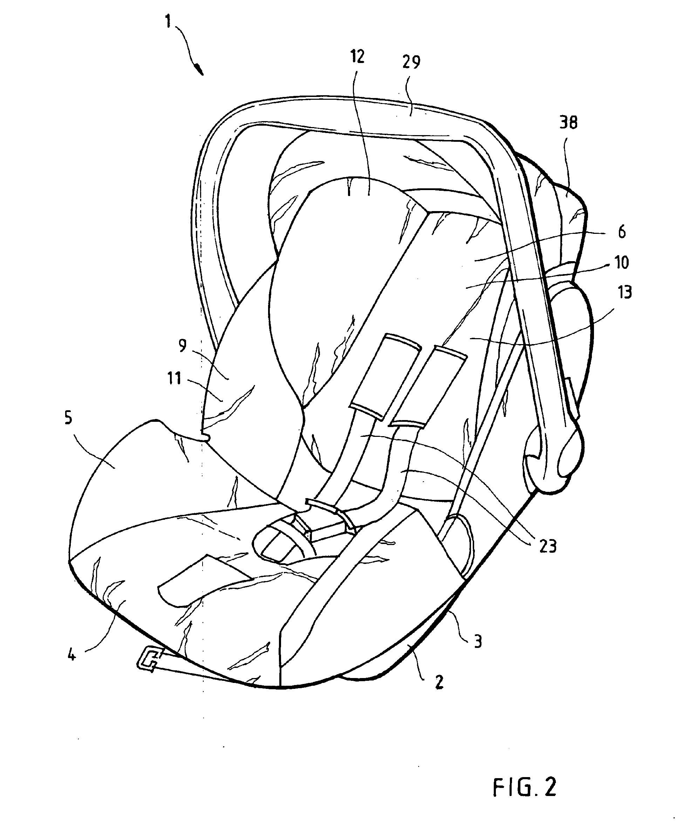

Wie Fig. 2 erkennen läßt, kann der bewegliche Lehnenteil 10 etwa in der Neigungsrichtung der Rückenlehne 6 ausgezogen werden, maximal um etwa die halbe Länge des unveränderlichen Teils 9 der Rückenlehne 6. Damit ist eine Anpassung an die zunehmende Körpergröße eines Kindes möglich. In dieser, in Fig. 2 wiedergegebenen Konfiguration ist die Babyschale 1 für ein älteres Kleinkind mit einer Größe von etwa 80 cm optimiert. Hierbei wirkt der verschiebbare Teil 9 nicht mehr als Sitzverkleinerer, sondern als Kopfstütze. Der zusätzliche Sitzverkleinerer 32 ist entfernt worden.

Die bewegliche Rückenlehne 10 umfaßt einen oberen bzw. distalen Abschnitt mit einem tragenden Teil 14 aus einem steifen Werkstoff, und einen an dessen Unterkante angesetzten, flächigen, lappenartigen Fortsatz 34. Der lappenartige Teil 34 hat etwa die Breite des oberen Teils 14 der beweglichen Lehne 10 und ist vorzugsweise dünner als der obere Teil 14; er kann sogar aus einem nachgiebigen Material wie Schaumstoff od. dgl. gefertigt sein, denn der lappenartige Abschnitt 34 hat weder führende noch tragende Funktion, sondern stützt sich auf dem unveränderlichen Teil 9 der Babyschale 1 ab. Er ist mit dem oberen Teil 14 der Rückenlehne 10 verbunden und eignet sich überdies zum Anbringen einer Lendenwirbelstütze (Lordose) für das Kleinkind. Eine solche Lordose kann durch eine quer zur Sitzrichtung verlaufende Schaumstoffrolle - bspw. mit etwa halbkreisförmigem Querschnitt - gebildet sein. An ihren beiden Enden können die Enden eines straffen Gummibandes od. dgl. befestigt sein, welches hinter dem Lappen 34 verläuft und dadurch die sich davor erstreckende Lordose lösbar festhält. Wie aus Fig. 1 und 2 ersichtlich, ist dieser Unterbau 14, 34 des ausziehbaren Rückenlehnenteils 10 mit einer Polsterung und einem Bezug versehen.

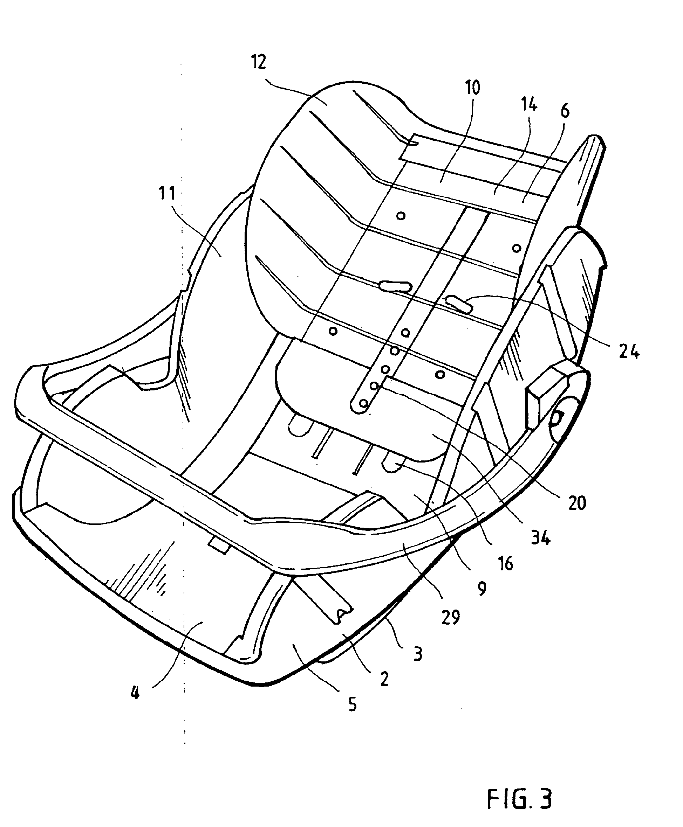

Die Verschiebung des beweglichen Teils 10 der Rückenlehne 6 wird ermöglicht durch eine Führungseinrichtung 15, die in den Fig. 3 bis 5 zu erkennen ist. Sie besteht aus mehreren, im vorliegenden Beispiel vier, zueinander parallelen, etwa in Sitzrichtung verlaufenden Schlitzen 16 in dem unveränderlichen Teil 9 der Rückenlehne 6. Jeder dieser vier Schlitze 16 wird durchgriffen von einer Schraube 17, die in die Rückseite 18 des ausziehbaren Teils 10 der Rückenlehne 6 eingeschraubt ist. Diese Schrauben 17 sind nicht vollständig eingeschraubt, so dass ihre Schäfte die Schlitze 16 durchgreifen und die Schraubenköpfe 18 samt übergestreifter Unterlegscheiben 35 die Schlitzränder 19 mit wenig Spiel umgreifen. Dieses Spiel ist so eingestellt, dass die Kopfstütze 10 gerade eben in Längsrichtung der Schlitze 16 verschoben werden kann, ohne zu klemmen.

Diese Mechanik - stufenlose Verstellung entlang einer Führung 15 etwa in der (geneigten) Ebene der Rückenlehne 6 einerseits, sowie von der Rück- bzw. Außenseite 21 der Rückenlehne 6 her zugängliche Arretierungs- und Lösungsmittel 36 andererseits - erlauben eine bequeme Verstellung der Lehnenlänge auch dann, wenn ein Kind in der Babyschale 1 liegt und/oder die Babyschale 1 in ein Fahrzeug eingebaut oder von diesem gelöst werden soll.

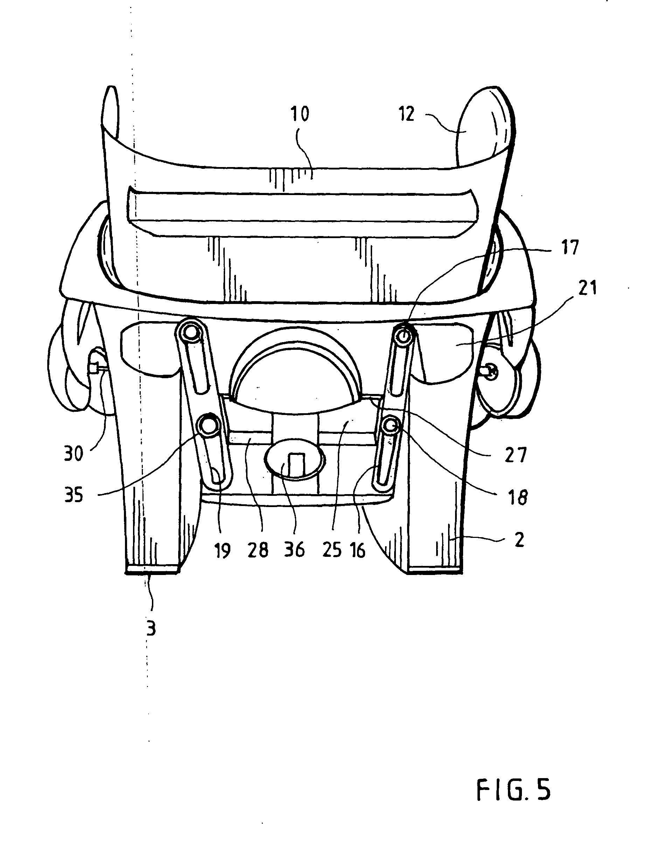

Um die Kopfstütze 10 in beiden Endpositionen und ggf. auch in einigen Zwischenpositionen arretieren zu können, sind in dem Unterbau des ausziehbaren Lehnenteils 10 eine Mehrzahl von Bohrungen 20 vorgesehen, vorzugsweise in einer Reihe hintereinander entlang der Mittel- oder Symmetrieachse dieses Lehnenteils 10. In der Unter- oder Außenseite 21 der Babyschale 1 befindet sich eine Lasche 36, welche gegenüber dem unveränderlichen Teil 9 der Babyschale 1 etwa in Sitzrichtung beweglich ist. Dieser Freiheitsgrad der Bewegung resultiert daraus, dass diese Lasche 36 nur entlang eines kleinen Teils ihres Umfangs mit dem unveränderlichen Lehnenteil 9 verbunden ist und daher von diesem weggebogen werden kann. An der in Fig. 5 nicht sichtbaren Innenseite dieser Lasche 36 ist ein Stift 37 oder Zapfen angeformt, der eine der Bohrungen 20 durchgreift und damit jegliche Verschiebebewegung der Kopfstütze 10 hemmt. In kräftefreiem Zustand wird die Lasche 36 derart nach innen gedrückt, dass der Stift 37 sicher in die betreffende Bohrung 20 eingreift. Ein rückwärtiger Handgriff an der lasche 36, bspw. eine angeformte Griffmulde, erlaubt ein bequemes Zurückziehen der Lasche 36.

Gemäß Fig. 1 und 2 ist die erfindungsgemäße Babyschale 1 mit einem Hosenträgergurt 22 versehen, um das Baby während einer Fahrt in einem Auto sicher zu halten. Der Hosenträgergurt 22 umfaßt zwei Schultergurte 23 mit je einer Schloßzunge an ihrem freien Ende, sowie einen, kurzen, unteren Gurt, der etwa mittig auf der Sitzfläche 4 verankert oder geführt ist und an seinem freien Ende ein Gurtschloß trägt, in welches die Schloßzungen lösbar einsteckbar sind.

Die beiden Schultergurte 23 sind durch je einen etwa quer verlaufenden Schlitz 24 in dem oberen Teil 14 des verschiebbaren Teils 10 der Rückenlehne 6 geführt, sowie durch je einen Längsschlitz 25 in dem unveränderlichen Teil 9 der Rückenlehne 6. An deren Rückseite 21 können die beiden Schultergurte 23 miteinander und/oder mit einer Spannvorrichtung oder einer sonstigen Verankerung, insbesondere an dem feststehenden Teil 9 der Babyschale 1, verbunden sein.

Die Querschlitze 24 in dem beweglichen Rückenlehnenteil 10 liegen zu beiden Seiten des der Mittel- oder Symmetrieachse bzw. -ebene desselben und sind an den Querschnitt je eines Schultergurtes 23 angepaßt, jeweils mit einem Spielraum in dem Bereich von 2 bis 15 mm. Wenn die Schultergurte 23 hinter den Querschlitzen 24 nach unten umgelenkt werden, muß die Arretierung 20 derart stabil ausgeführt sein, dass sie in die Lage versetzt ist, die in Verschiebungsrichtung 26 wirkenden Gurtzugkräfte aufnehmen zu können.

Die Längsschlitze 25 liegen hinter den Querschlitzen 24. Während ihre Breite etwa der Breite der Schultergurte 23 zuzüglich eines Spielraums entspricht, sollte ihre Länge mindestens so groß sein wie der Abstand zwischen den beiden äußersten Arretierungsbohrungen 20. In der vollständig eingeschobenen Position der Kopfstütze 10 liegt ein Querschlitz 24 etwa auf Höhe der Oberkante 27 des betreffenden Längsschlitzes 25; in der maximal ausgezogenen Position der Kopfstütze 10 dagegen auf Höhe der Unterkante 28 des betreffenden Längsschlitzes 25, so dass der Gurtverlauf nicht beeinträchtigt wird.

An dem ausziehbaren Teil 10 der Rückenlehne 6 ist ein Dach 38 angeordnet, welches ein Baby bei Regen oder starker Sonnenstrahlung schützt. Infolge seiner Befestigung an dem beweglichen Lehnenteil 10 verschiebt sich dieses Dach 38 entsprechend der Stellung der ausziehbaren Rückenlehne 10 und wächst sozusagen mit dieser mit. Es kann daher - im Gegensatz zu herkömmlichen Babyschalen - so lange verwendet werden, bis das Kind der Babyschale 1 völlig entwachsen ist. Das Dach 38 kann mittels Druckknöpfen befestigt und damit lösbar sein, bspw. während des Transports in einem Auto.

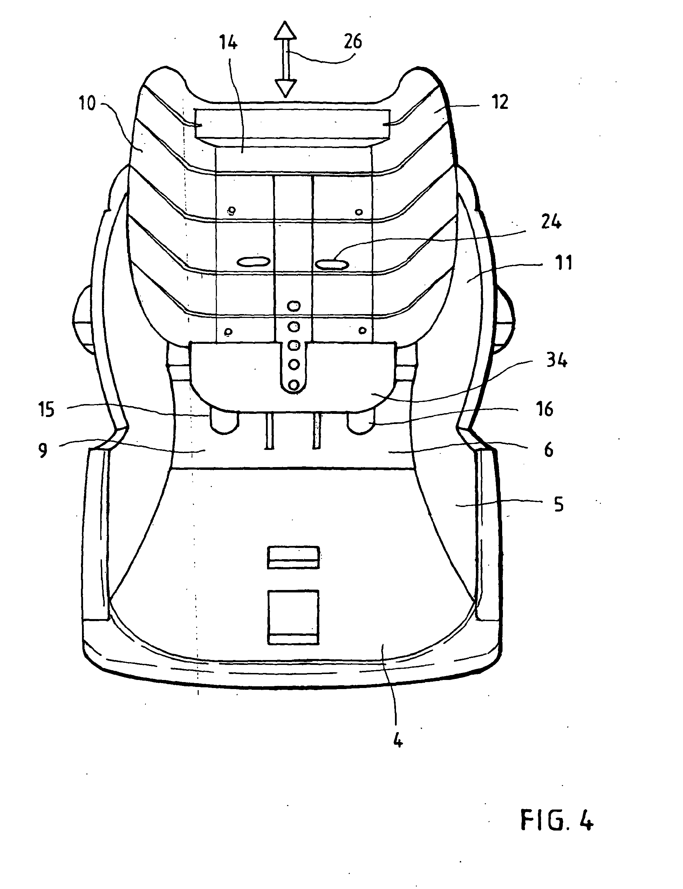

An den Außenseiten des Unterteils 2 oder der Armstützen 5 ist ein Tragbügel 29 um eine quer verlaufende Drehachse verschwenkbar angelenkt 30. Die Seitenschenkel 31 des Tragbügels 29 sind länger als die Sitzfläche 4 und/oder länger als die Rückenlehne 6 in deren maximal verlängerter Konfiguration. Dadurch kann der Tragbügel 29 in verschiedene Positionen gebracht und dort sodann jeweils arretiert werden, bspw. in die Trageposition gemäß Fig. 1 oder 2, in eine Position oberhalb der Sitzfläche 4 für den Transport in einem Auto, vgl. Fig. 3 und 5, oder in eine Position hinter der Rückenlehne 6 wie in Fig. 4, wobei sich der Quersteg 39 des Tragbügels 29 etwa in einer gemeinsamen Ebene mit einem mittleren Abschnitt der Aufstandsfläche 3 der die Babyschale 1 erstreckt, so dass diese auf einer ebenen Fläche abgestellt werden kann, ohne zu kippen oder zu schaukeln.

## Patentansprüche

1. Babyschale (1) mit einer Sitzfläche (4) und einer dieser gegenüber sehr flach geneigten Rückenlehne (6) für den Transport von Kleinkindern etwa in halb liegender, halb sitzender Körperhaltung insbesondere in einem Auto entgegen dessen Fahrtrichtung, wobei ein den Kopf des Babys stützender Bereich (10) gegenüber der Sitzfläche (4) etwa in Richtung des Rückgrats eines in der Babyschale (1) sitzenden Babys verschieb- bzw. ausziehbar ist (26), wobei die Länge der Rückenlehne (6) in Richtung des Rückgrats eines in der Babyschale (1) sitzenden Babys veränderbar ist, wenn ein Kind in der Babyschale (1) liegt und/oder wenn die Babyschale (1) auf dem Sitz eines Autos entgegen dessen Fahrtrichtung befestigt ist, **dadurch gekennzeichnet, dass** die verschiebbare Kopfstütze (10) an ihrer Außenseite zumindest teilweise von einem unveränderlichen, insbesondere einem mit dem Korpus der Babyschale integrierten Bereich (9) der Rückenlehne (6) vorzugsweise stützend umgriffen wird, wobei die Oberkante der verschiebbaren Kopfstütze (10) in jeder ausgezogenen Position über die Oberkante des unveränderlichen Bereichs (9) der Rückenlehne (6) übersteht.

2. Babyschale nach Anspruch 1, **dadurch gekennzeichnet, dass** die verschiebbare Kopfstütze (10) in der eingeschobenen Position bis nahezu an die Sitzfläche (4) herabreicht.

3. Babyschale nach einem der vorhergehenden Ansprüche, **dadurch gekennzeichnet, dass** im Bereich der Unterkante der Kopfstütze (10) ein platten- oder lappenförmiger Ansatz vorgesehen ist.

4. Babyschale nach einem der vorhergehenden Ansprüche, **dadurch gekennzeichnet, dass** die verschiebbare Kopfstütze (10) entlang einer Führungseinrichtung (15) der Rückenlehne (6) verschiebbar (26) ist.

5. Babyschale nach einem der vorhergehenden Ansprüche, **dadurch gekennzeichnet, dass** die verschiebbare Kopfstütze (10) an dem unveränderlichen Teil (9) der Rückenlehne (6) arretierbar ist.

6. Babyschale nach Anspruch 5, **dadurch gekennzeichnet, dass** an der verschiebbaren Kopfstütze (10) und/oder an dem unveränderlichen Teil (9) der Rückenlehne (6) eine Reihe von Öffnungen (20) oder Vertiefungen zum Hindurchstecken eines Arretierungsstiftes (37) od. dgl. vorgesehen ist.

7. Babyschale nach einem der vorhergehenden Ansprüche, **dadurch gekennzeichnet, dass** die verschiebbare Kopfstütze (10) mit Seitenstützen (12) versehen ist.

8. Babyschale nach einem der vorhergehenden Ansprüche, **dadurch gekennzeichnet, dass** sich die seitlichen Kopfstützen (12) zwischen, d.h., innerhalb von seitlichen Armstützen (11) des unveränderlichen Bereichs (9) der Rückenlehne (6) befinden.

9. Babyschale nach einem der vorhergehenden Ansprüche, **dadurch gekennzeichnet, dass** an der Babyschale (1) ein schaleneigener Gurt, insbesondere ein Hosenträgergurt (22), vorgesehen ist.

10. Babyschale nach einem der vorhergehenden Ansprüche, **gekennzeichnet durch** einen an dem Korpus der Babyschale (1) ggf. verstellbar verankerten (30) Tragbügel (29).

## Claims

1. Baby support (1) with a seat surface (4) and a backrest (6) inclined every shallowly relative thereto, for transporting infants or toddlers approximately in a half-lying, hatf-sittihg Position, particularly in a car opposite its direction of travel, whereby a region (10) supporting the head of the infant can be displaced or extended (26) relative to said seat surface (4) approximately in the direction of the spine of an infant sitting in said baby support (1), whereby the length of said backrest (6) can be varied in the direction of the spine of an infant sitting in said baby support (1), when a child is in said baby support (1) and/or when said baby support (1) is fastened on the seat of a car opposite the direction of travel thereof, **characterized in that** staid displaceable head rest (10) is preferably at least partially embraced supportingly on its outer side by an unchangeable region (9) of said backrest (6) that is in particular integrated with the body of said baby support, whereby the top edge of said displaceable head rest (10) in any extended position protrudes above the top edge of said unchangeable region (9) of said backrest (6).

2. Baby support according to claim 1, **characterized in that** the displaceable head rest (10) in the retracted position reaches downward almost to said seat surface (4).

3. Baby support according to one of the preceding claims, **characterized in that** a plate- or lobe-shaped extension is provided in the region of the bottom edge of said displaceable head rest (10).

4. Baby support according to one of the preceding clams, **characterized in- that** said displaceable head rest (10) is displaceable (26) along a guide mechanism (15) of said backrest (6).

5. Baby support according to one of the preceding claims, **characterized in that** said displaceable head rest (10) can be locked in place on said unchangeable portion (9) of said backrest (6).

6. Baby support according to claim 5, **characterized in that** provided on said displaceable head rest (10) and/or on said unchangeable portion (9) of said backrest (6) is a series of openings (20) or recesses through which a lock pin (37) or the like is to be passed.

7. Baby support according to one of the preceding claims, **characterized in that** said displaceable head rest (10) is provided with lateral head wings (12).

8. Baby support according to one of the preceding claims, **characterized in that** the lateral head wings (12) are locate between, i.e., within, lateral armrests (11) of said unchangeable region (9) oaf said backrest (6).

9. Baby support according to one of the preceding claims, **characterized in that** the baby support (1) comprises an own belt, particularly a harness belt (22).

10. Baby support according to one of the preceding claims, **characterized by** a carrying handle (29) that is anchored (30), optionally adjustably, to the body of said baby support (1).

## Revendications

1. Siège coque pour bébé (1) avec une assise (4) et un dossier très légèrement incliné (6) par rapport à celle-ci pour le transport d'enfants en bas âge, par exemple en position semi-allongée, semi-assise, en particulier dans une voiture dos à la route, où une zone (10) soutenant la tête du bébé peut être déplacée ou tirée (26) par rapport à l'assise (4) approximativement en direction de la colonne vertébrale d'un bébé assis dans le siège coque (1), où la longueur du dossier (6) en direction de la colonne- vertébrale d'un bébé assis dans le siège coque (1) peut être modifiée lorsqu'un enfant est couché dans le siège coque (1) et/ou lorsque le siège coque (1) est fixé sur le siège d'une voiture dans le sens contraire de la marche, **caractérisé en ce que** l'appuie-tête coulissant (10) est entouré, de préférence renforcé, sur son côté extérieur tout au moins partiellement par une zone (9) fixe du dossier (6), en particulier intégrée au corps du siège coque, où le bord supérieur de l'appuie-tête coulissant (10) dans toutes les positions tirées dépasse du bord supérieur de la zone fixe (9) du dossier (6).

2. Siège coque pour bébé selon la revendication 1, **caractérisé en ce que** l'appuie-tête coulissant (10) en position enfoncée descend pratiquement jusqu'à l'assise (4).

3. Siège coque pour bébé selon l'une des revendications précédentes, **caractérisé en ce qu'**un renfort de forme plate ou en forme de bande est prévu dans la zone du bord inférieur de l'appuie-tête (10).

4. Siège coque pour bébé selon l'une des revendications précédentes, **caractérisé en ce que** l'appuie-tête coulissant (10) peut être déplacé (26) sur la longueur d'un dispositif de guidage (15) du dossier (6).

5. Siège coque pour bébé selon l'une des revendications précédentes, **caractérisé en ce que** l'appuie-tête coulissant (10) peut être bloqué sur la partie fixe (9) du dossier (6).

6. Siège coque pour bébé selon la revendication 5, **caractérisé en ce que** sur l'appuie-tête coulissant (10) et/ou sur la partie fixe (9) du dossier (6) est prévue une série d'ouvertures (20) ou de cavités pour insérer un goujon d'arrêt (37) ou similaire.

7. Siège coque pour bébé selon l'une des revendication précédentes, **caractérisé en ce que** l'appuie-téte coulissant (10) est doté de renforts latéraux (12).

8. Siège coque pour bébé selon l'une des revendications précédentes, **caractérisé en ce que** les renforts latéraux (12) sont entre, c.-à-d. intégrés aux accoudoirs latéraux (11) de la zone fixe (9) du dossier (6).

9. Siège coque pour bébé selon l'une des revendications précédentes, **caractérisé en ce qu'**une ceinture propre à la coque, en particulier un harnais (22), est prévue sur le siège coque pour bébé (1).

10. Siège coque pour bébé selon l'une des revendications p-récédentes, cara-ctérisé par une poignée pour le-transport (29), le cas échéant fixée de manière réglable (30) sur le corps du siège coque pour bébé (1).
